# EUROPEAN PATENT SPECIFICATION

(11) **EP 0 571 627 B1**
(45) Date of publication and mention of the grant of the patent: **26.08.1998**
(21) Application number: 92901904.0
(22) Date of filing: 26.12.1991
(51) Int. Cl.: A01C 11/02

(54) **DEVICE FOR SEPARATING SEEDLINGS**
VEREINZELUNGSVORRICHTUNG FÜR SETZLINGE
DISPOSITIF DE SEPARATION DE SEMIS

(30) Priority: 26.12.1990 JP 414703/90
(43) Date of publication of application: 01.12.1993
(73) Proprietor: HOKUEI CO., LTD., Hokkaido 065 (JP)
(72) Inventor: SASAKI, Takashi, Ebetsu-shi, Hokkaido 069 (JP); KITAGUCHI, Shoichi, Ishikari-gun, Hokkaido 068-11 (JP)
(74) Representative: Oppermann, Ewald, Dipl.-Ing.
(86) International application number: JP9101771
(87) International publication number: WO9211746

(56) References cited:
- GB-A- 1 219 366
- JP-B-54 020 406
- JP-Y-57 029 522

## Description

### Technical Field

The present invention relates to a seedling separation apparatus which is usable for transplanting seedlings raised in a manner to be wrapped with a substantially cylindrical wrap of paper or the like in the production of crops and, upon transplantation, separates such an individual seedling wrap from the adjacent one in each seedling wrap array.

### Background Art

In a transplanting machine disclosed, for example, in Published Unexamined Japanese Utility Model Registration No. 57-15608 forming the preamble portion of claim 1, and document JP-Y2-5729522, a separation apparatus of this type is employed according to which seedlings are wrapped with a paper cylinder, the resultant seedling wraps are joined into a band-like, serpentinely bent unit and the seedling wrap band unit is placed on a seedling supply base and, while being continuously delivered as an array, has its individual seedling wrap separated by separation rollers and transported to the following transplanting apparatus section. The seedling wraps of the seeding wrap band unit are joined together by a paper connecting section and each serpentinely bent array is joined to the adjacent array by water-soluble paste.

The seedling wrap unit is transferred to a belt conveyor on the seedling supply base of the transplanting machine and, while being continuously withdrawn as an array from the withdrawing rollers, the individual seedling wrap is sequentially separated by the separation rollers from the rest of the seedling wrap unit. In the withdrawing process, however, if the paper connecting section of the seedling wrap unit is cut or broken for some reason, then the seedling wrap transfer is immediately stopped due to the interruption of a connection to the rest of the seedling wrap unit. This causes some inconvenience in the transplanting operation of seedlings.

In the paper seedling wrap unit it is necessary to impart proper retaining force to the paper connection section and achieve a somewhat uniform connection at the respective connection section. Such control is hard to achieve in the nurturing or raising of seedlings. It may be possible to adjust the force and speed with which seedlings are withdrawn, each time, on the roller side, but this presents various complex structural problems in this type of agricultural machinery.

It is accordingly the object of the present invention to provide a seedling separation apparatus which, without using the aforementioned seedling wrap band unit, can use a plurality of arrays of seedling wraps with each seedling wrap joined to an adjacent seedling wrap by water-soluble paste, can deliver the arrayed seedling wraps placed on a seedling supply base, can positively separate a forward seedling wrap one by one from the remaining seedling wraps in the respective seedling wrap array and can smoothly convey the individual seedling wrap to the following transplanting mechanism, whereby it is possible to very prominently improve the transplanting operation efficiency.

### Disclosure of the Invention

The above object is solved by the features indicated in claim 1. According to the characterizing features of claim 1 the seedling wrap moving mechanism includes a further moving mechanism which is reciprocatable parallel to a row direction of the seedling wraps, wherein the moving mechanism is provided on the further moving mechanism and adapted to intermittently move in a direction perpendicular to the moving direction of the further moving mechanism at an end of the movement thereof, to deliver only one row of the seedling wraps. In addition, according to the invention, the pair of separating rollers is adapted to be alternately moved back and forth at an end of the movement of the further moving mechanism, wherein one of the separating rollers is contactable to the seedling wraps of the forefront row, while the other separating roller is movable to a position close to the seedling wraps of a subsequent row, whereby the seedling wraps can be separated into the individual seedling wraps, beginning with the seedling wraps of the forefront row.

### Brief Description of the Drawings

Fig. 1 is a plan view showing a seedling separation apparatus according to an embodiment of the present invention;
Fig. 2 is a side view, as taken along line A-A as indicated by arrows in Fig. 1;
Fig. 3 is a side view, as taken along line B-B as indicated by arrows in Fig. 1;
Figs. 4 and 5 each are a plan view diagrammatically showing a relation, in particular, of a first moving mechanism to paired separation rollers in the seedling separation apparatus; and
Figs. 6 and 7 each are a plan view showing the seedling separation apparatus in an operative state.

### Preferred Embodiment of the Invention

One embodiment of the present invention will be explained below with reference to the accompanying drawings.

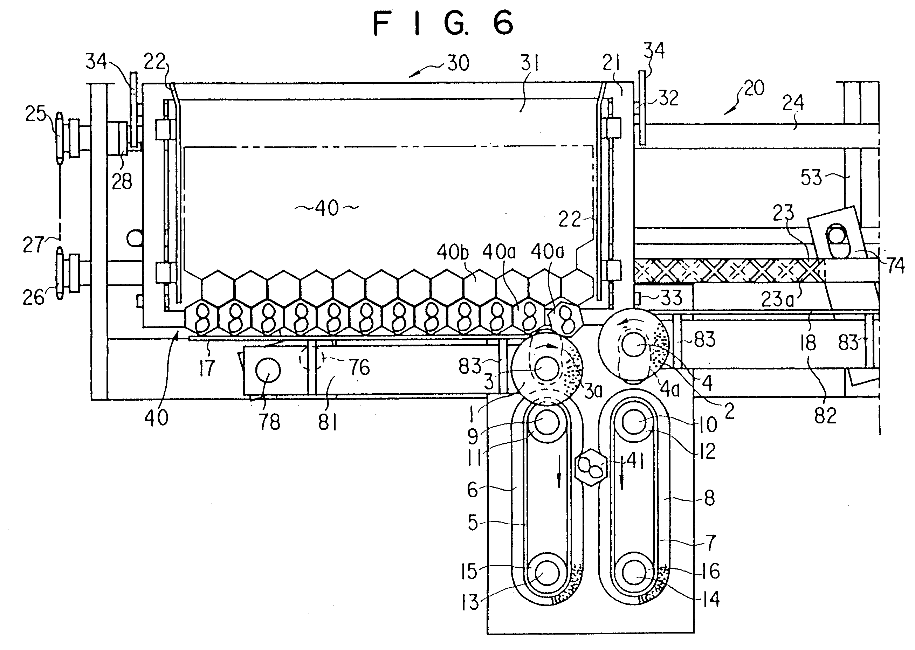

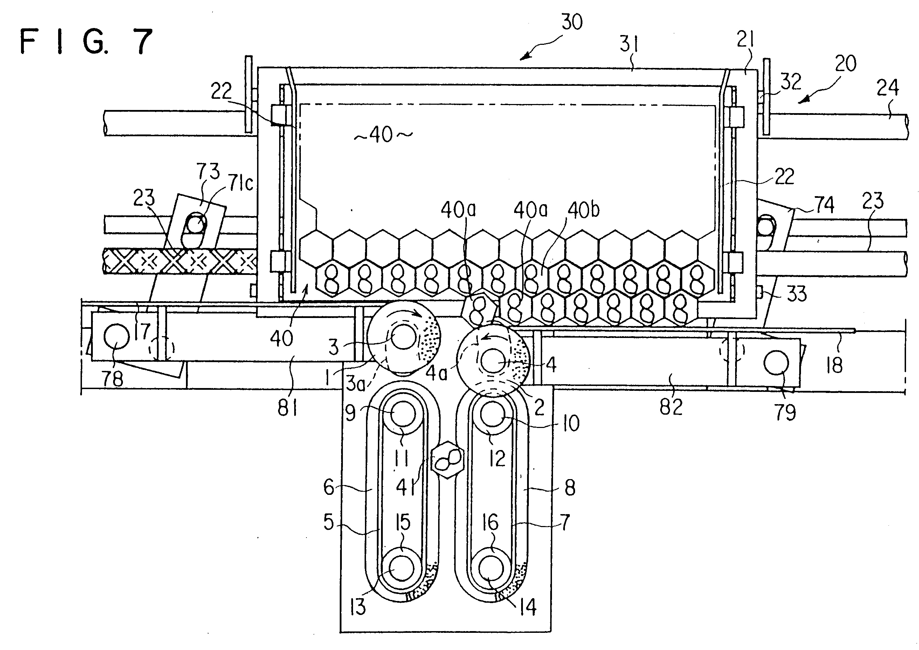

As shown in Figs. 6 and 7, reference numeral 40 represents regular arrays of seedlings each wrapped with a hexagonal paper cylinder and all so joined by paste as to be made separable as individual, wrapped seedlings. Each hexagonal paper wrap is opened at its top and bottom and each seedling is raised or nurtured on a culture medium through sowing and enclosed with the paper wrap. The paste for joining together the paper wraps is of such a water-soluble type that it is gradually dissolvable upon watering and enables the paper wrap, with which the seedling is enclosed, to be joined to an adjacent one through the degeneration of the paper so that, upon transplantation, these paper wraps are joined together with a proper bond strength to provide arrays of seedlings 40 as set out above.

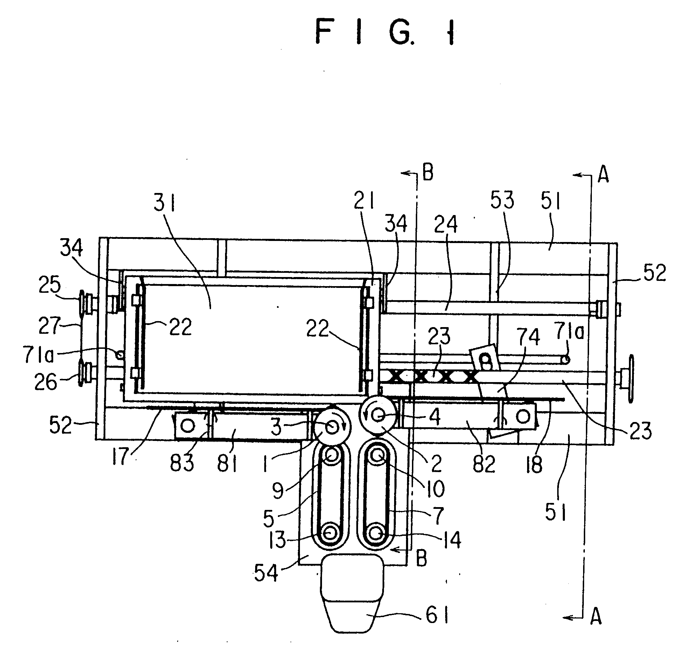

Fig. 1 is a diagrammatic view showing an arrangement of a seedling separation apparatus. In Fig. 1, reference numeral 51 denotes a machine framework consisting of paired parallel frame members provided in a spaced-apart relation. Paired outer frames 52 are provided on both ends of a length of the machine framework with an inner frame 53 located at an intermediate portion between the paired outer frames 52. A separation machine frame 54 is provided at an intermediate area of the machine framework 51.

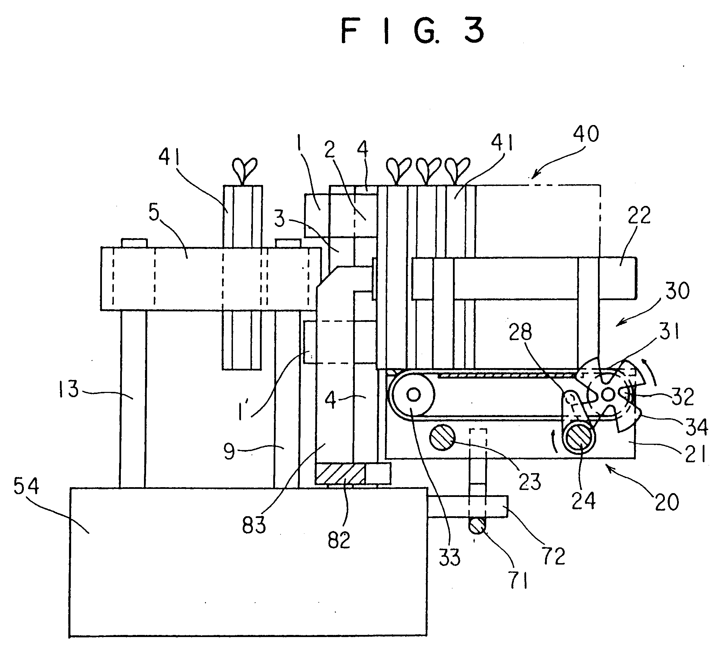

The seedling separation apparatus is mounted on the machine framework 51 as a portion of a transplanting machine and is of such a type that it comprises a seedling moving mechanism 30 and a further seedling moving mechanism 20. The further seedling moving mechanism 20 is reciprocably movable in a lateral direction perpendicular to a travelling direction (a direction as indicated by an arrow in Fig. 3) of the transplanting machine to allow the arrayed seedlings 40 to be moved on the machine framework 51. The seedling moving mechanism 30 is provided over the further seedling moving mechanism 20 and intermittently moved to enable each seedling array 40 to be delivered at a time in a direction perpendicular to that of movement of the further seedling moving mechanism 20. A pair of separation rollers 1, 2 is provided opposite the seedling delivery position of the moving mechanism 30 and set in contact with the most forward seedling array to allow the individual wrapped seedling 41 to be separated. Further, the wrapped seedling 41 separated by the seedling separation apparatus is conveyed by belt conveyors 5, 7 in a sandwiched relation as shown in Fig. 6 and supplied to a seedling drop tube 61.

The further moving mechanism 20 has a moving mechanism frame 21 of a substantially rectangular configuration in a plan view. A pair of seedling guides 22 are uprightly provided one at each end of a length of the mechanism frame 21 and oppositely arranged at a spacing somewhat greater than the width of the seedling array 40. Below the mechanism frame 21 two shafts 23 and 24 extend along their moving direction and are supported on the opposite outer frames 52. The mechanism frame 21 is supported by the shafts 23 and 24 in an engaged relation such that it is reciprocably moved along the shafts. To be specific, double helical threads 23 are provided on the shaft 23 and engage a projection, not shown, formed on the mechanism frame 21. The frame 21 is continuously and reciprocably moved along the shaft 23 with the rotation of the shaft 23 and the width of movement is set to be somewhat larger than the width of the seedling array 40. Further, the speed of the movement is set to be slower than the peripheral speeds of the separation rollers 1 and 2, for example, to be one-third the peripheral speed as set out above. As shown in Fig. 6, sprockets 25 and 26 are mounted on those ends of the shafts 24 and 23 extending out of the outer frame with a chain 27 run between the sprockets 25 and 26. As a result, both the shafts 23, 24 are rotated at the same rate. A cam 28 is mounted on the shaft 24 relative to the inner wall of the outer frame 52 and engages with a cam receiver 34 as will be set out below.

The moving mechanism 30 is provided relative to the mechanism frame 21 and movable in a direction perpendicular to that of movement of the further seedling moving mechanism 20. In the mechanism 30 a belt 31 is run over and between pulley shafts 32 and 33 spaced apart in the longitudinal direction of the bottom of the mechanism frame 21 and has a width somewhat narrower than the length of the frame 21. The arrays of wrapped seedlings (seedling wraps) 40 are disposed on the belt 31 and intermittently moved the perpendicular direction as set out above.

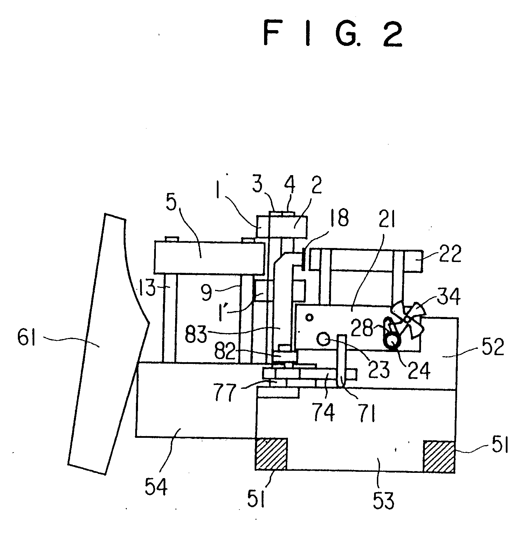

Stated in another way, with such an intermittent moving mechanism a disk-like cam receiver 34 is provided on each end of pulley shaft 32 as shown in Figs. 2 and 3 and has equidistantly formed cutouts at its outer periphery. By the engaging of a cam 28 on the shaft 24 with the cam receiver 34 the rotation of the shaft 24 is transmitted to the pulley shaft 32 to move the belt 31 of the moving mechanism 30. Put it in another way, the cam 28 engages with the cam receiver 34 at each end-of-movement position of the mechanism frame 21 reciprocably movable along the shafts 23 and 24. As a result, the cam receiver 34 is moved one step at a time so that one corresponding seedling array is intermittently delivered at a time toward the paired separation rollers 1, 2.

The separation rollers 1, 2 are of such a type that each is covered with an elastic material, such as sponge and both are mounted as two stages (1, 1' and 2, 2'), upper and lower, on the rotation shafts 3 and 4 which are mounted in a vertical direction relative to the separation mechanism frame 54. The distance between both the rollers 1 and 2 is so set as to be narrower at their most proximity area than the diameter of the seedling wrap. As a result, the seedling wrap 41 is delivered, as a separate one, in a manner to be surrounded between the rollers 1 and 2. The shaft-to-shaft distance and diameter of the rollers 1 and 2 are determined by the diameter of the seedling wrap 41.

In the aforementioned embodiment the seedling wrap is about 2 cm in diameter and, in this case, the shaft-to-shaft distance between the rollers 1 and 2 is properly set to be about 2.5 times the diameter of the seedling wrap and the diameter of the roller properly about 2 times.

Spur gears, not shown, of equal interval teeth are provided on the shafts 3 and 4 of the rollers 1 and 2 and can be rotated at the same rate in opposite directions as indicated by arrows in Fig. 6.

Further a pair of shafts 9, 10 is provided on the seedling delivery side of the rollers 1 and 2 and located in proximity to and spaced at substantially the same distance from that of the shafts 3 and 4. On the extension lines connecting these shafts 3 and 4 and 9 and 10, respectively, a pair of shafts 13, 14 is uprightly provided on the separation mechanism frame 54 in the same spaced-apart relation to the shafts 9 and 10. Pulleys 11, 12, 15 and 16 are provided on the shafts 9, 10, 13 and 14, respectively, and a belt 5 is run between the pulleys 11 and 15, and a belt 7 between the pulleys 12 and 16.

The belts 5 and 7 are covered with an elastic material, such as sponge, and rotationally driven by, for example, pulleys 15 and 16. In this case, spur gears, not shown, of equal interval teeth are fitted on the shafts 13 and 14 and set in mesh with each other in a manner to rotate in mutually opposite directions at the same peripheral speed, noting that their peripheral speed is set faster, for example about 30% faster, than those of the rollers 1 and 2.

The rollers 1 and 2 are alternately moved back and forth, under the function of a link mechanism as will be set out below, in a direction parallel to that in which the seedling wrap is delivered by the moving mechanism 30, that is, moved back and forth without varying the distance between the shafts 3 and 4. The moving distance is so set as to enable one seedling wrap array to be delivered at a time, that is, to be moved by a distance somewhat smaller than the diameter of the seedling wrap. Thus, the rotation shafts 3 and 4 are uprightly provided over the mechanism 54 so as to be slidably moved via corresponding elongated grooves 3a and 4a in the mechanism frame 54.

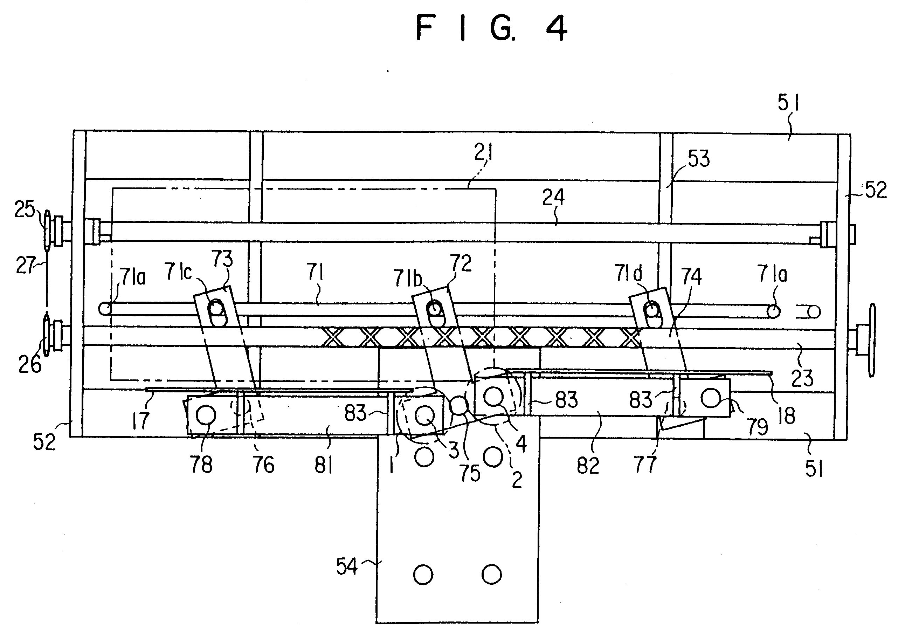

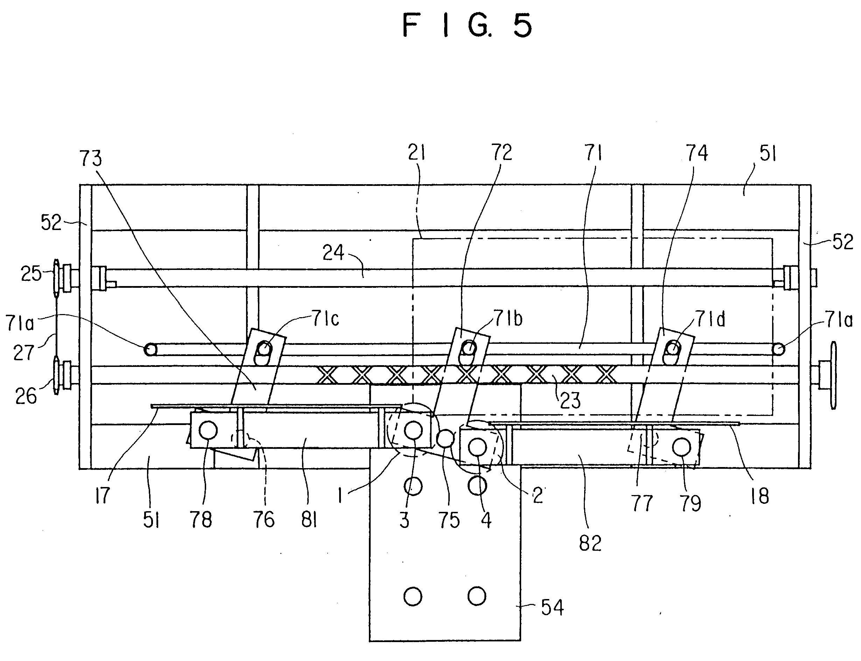

With the back/forth movement mechanism of the rollers 1 and 2, as shown in Figs. 4 and 5, the shafts 3 and 4 are fitted in a T-shaped link 72. The link 72 is rotatably supported by a pin 75 provided as a projecting pin on the mechanism frame 54.

In Figs. 4 and 5, reference numerals 81 and 82 show support frames whose one end portions are pivotally supported on the shafts 3 and 4, the other end portion of the support frame extending in a direction parallel to the framework 51. L-shaped links 73 and 74 as will be set out below are coupled by pins 78 and 79 at said other ends of the support frames.

In Figs. 4 and 5, reference numeral 71 shows a rod associated with the aforementioned link mechanism and mounted on the inner frame 53. The rod 71 is arranged below the mechanism frame 21 and extends in a direction in which the frame 21 is moved.

Both ends of the rod 71 are situated at such a level as to make contact with the side ends of the mechanism frame 21 to provide engaging sections 71a. The distance between the engaging areas 71a and 71a is set somewhat narrower than the moving distance covered by the mechanism frame 21. A pin 71b is arranged as a projecting pin at a middle place of the rod 71, that is, at a location opposing the support pin 75 provided at the T-shaped link 72.

Pins 71c and 71d are provided as projecting pins on the rod 71 such that the pins 71c and 71d are situated at those places opposite the pins 76 and 77 of the L-shaped links 73 and 74, respectively, that is, the pins 71c and 71d are arranged one to the right and one to the left, respectively, with the pin 71b as a reference such that they are projected on the rod 71. The pins 71b, 71c and 71d are inserted into elongated holes, respectively, in the forward end portions of the links 72, 73 and 74.

In Figs. 4 and 5 reference numerals 17 and 18 show seedling wrap array restricting members, respectively, mounted on support frames 83, which are uprightly mounted on the support frames 81 and 82. The respective restricting members 17 and 18 are arranged at those heights corresponding to the upper and lower rollers 1, 1' and 2, 2', that is, at those heights at which they are set in contact with the seedling wrap array 40, and extend along and parallel to the seedling wrap array 40 The restricting members 17 and 18 are moved in unison with the movement of the back/forth movable rollers 1 and 2, and alternately moved back and forth by a distance corresponding to that of the rollers 1 and 2.

The mechanism frame 21 having such a moving mechanism as set out above is movable in a horizontal direction on the shafts 23 and 24 and, when an end-of-movement position is reached, is brought in abutting engagement with the engaging section 71a of the rod 71 and pushes the rod 71, thus enabling the rod 71 to be somewhat moved in the aforementioned moving direction. With the rod 71 so moved, the links 72, 73 and 74 engaging the pins 71b, 71c and 71d via corresponding elongated holes, are rotated about support pins 75, 76 and 77, respectively, through their corresponding predetermined angles, thus allowing the shafts 3 and 4 engaging the link 72 and hence the corresponding support frames 81 and 82 to be moved back and forth.

As shown in Fig. 4, when the mechanism frame 21 is moved to the left and reaches its end-of-movement position, the shaft 3 and seedling wrap array restricting member 17 are retracted relative to the mechanism frame 21 and the shaft 4 and seedling wrap array restricting member 18 are advanced relative to the mechanism frame 21. When, on the other hand, the mechanism frame 21 is moved to the right as shown in Fig. 5, the shaft 3 and seedling wrap array restricting member 17 are advanced relative to the mechanism 21, and the shaft 4 and seedling wrap array restricting member 18 are retracted back relative to the mechanism frame 18.

In the aforementioned end-of-movement position the cam 28 on the shaft 24 engages the cam receiver 34 on the end of the pulley shaft 32 to enable the cam receiver 34 to be rotated and hence the belt 31 to be moved in a direction perpendicular to that of movement of the further seedling moving mechanism 20.

The operation of the seedling separation apparatus thus constructed will be explained below. Let it be assumed that, for example, the mechanism frame 21 is located to the left end-of-movement position as shown in Fig. 6 corresponding to the state shown in Fig. 4. In this position, a plurality of seedling wrap arrays 40 on the belt 31 of the moving mechanism 30 are so located as to have its most front seedling wrap array 40a delivered to a position where it is set in contact with the seedling wrap array restricting member 17 in the retracted-back position. Simultaneously, the roller 1 in the corresponding retracted-back position is set in abutting contact with the forward-end seedling wrap in the most front seedling wrap array 40a. Further, the roller 2 and restricting member 18 in the advanced position are set in proximity to a seedling wrap 40b in a second seedling wrap array.

With the rightward movement of the mechanism frame 21 the rollers 1 and 2 are rotated by the shafts 3 and 4, in the directions indicated by arrows in Fig. 6, at a peripheral speed faster than the seedling wrap moving speed by the mechanism frame 21.

Thus, the forward-end seedling wrap of the most front seedling wrap array 40a set in abutting contact with the roller 1, is separated from the next adjacent seedling wrap or the forward-end one, being still partially joined to the remaining front most seedling wrap array, is rolled in a manner to be sandwiched between the roller 1 and the second seedling wrap array 40b, and completely separated from the next adjacent seedling wrap 40a. The separated seedling wrap 41 enters a gap between the rollers 1 and 2 and is further transported by the following belt mechanism (belt conveyors 5 and 7). The mechanism frame 21 is sequentially moved in the same way as set out above and the adjacent seedling wrap of the most front seedling wrap array 40a is sequentially and individually separated from the rest of the most front seedling wrap array 40a.

With the mechanism frame 21 moved to the rightward end-of-movement position the aforementioned link mechanism is operated, moving the rollers 1 and 2 in a reversed position. The aforementioned cam mechanism (28, 34) is driven, thus moving the belt 31 to allow one seedling wrap array to be delivered at a time in the direction perpendicular to that of movement of the further seedling moving mechanism 20. To be specific, the second seedling wrap array 40b is moved as a new front most seedling wrap array and the mechanism frame 21 is moved to the left and the separation of the seedling wraps is carried out as shown in Fig. 7.

According to the present invention, as set out above, individual seedling wraps, etc., are arranged in a plurality of arrays with each seedling wrap separably joined to the adjacent seedling wrap in each wrap array. The respective seedling wrap array is arranged on the seedling wrap moving mechanism movable in the directions as set out above and is delivered in such an arrayed state. By setting the separation rollers in abutting contact with the front most seedling wrap array the forward-end seedling wrap is properly separated one at a time from the next adjacent seedling wrap and smoothly transportable to the following transplanting mechanism. By so doing, it is possible to very remarkably enhance a transplanting operation efficiency in this type of transplantation culture. Although in the aforementioned embodiment the arrayed seedlings have been explained as being comprised of arrayed nurtured seedling wraps, use can be made, as a seedling wrap or package, of an inorganic fiber or a high polymer compound so that the seedling nurtured wrap or package constitutes a culture medium per se. In either case, the respective individual seedling wraps or packages, being separably joined to each other, can be employed as arrayed seedling wraps or packages according to the present invention.

## Claims

1. A seedling wrap separation apparatus, comprising
a seedling wrap moving mechanism adapted to have seedling wraps (40) arranged in rows and columns and connected to be separatable into individual seedling wraps (41) placed thereon, for moving the seedling wraps (40), said seedling wrap moving mechanism including a moving mechanism (30), and
a separating mechanism located ahead of said moving mechanism (30) as viewed in a direction in which the moving mechanism (30) is capable of moving the seedling wraps (40), said separating mechanism including a pair of separating rollers (1, 2) adapted to oppose seedling wraps (40a) of a forefront row,
wherein the seedling wraps (40) can be brought into contact with said separating mechanism and thereby separated into the individual seedling wraps (41),
**characterized in that** said seedling wrap moving mechanism includes a further moving mechanism (20) which is reciprocatable parallel to a row direction of the seedling wraps (40), wherein said moving mechanism (30) is provided on said further moving mechanism (20) and adapted to intermittently move in a direction perpendicular to the moving direction of said further moving mechanism (20) at an end of the movement thereof, to deliver only one row of the seedling wraps (40), and that
said pair of separating rollers (1, 2) is adapted to be alternately moved back and forth at an end of the movement of said further moving mechanism (20), wherein one (1) of said separating rollers (1, 2) is contactable to the seedling wraps (40a) of the forefront row, while the other separating roller (2) is movable to a position close to the seedling wraps (40b) of a subsequent row, whereby the seedling wraps (40) can be separated into the individual seedling wraps (41), beginning with the seedling wraps (40a) of the forefront row.

## Patentansprüche

1. Vereinzelungsvorrichtung für umhüllte Setzlinge, mit
einem Setzlings-Bewegungsmechanismus, der dazu angepaßt ist, daß umhüllte Setzlinge (40), die in Reihen und Spalten angeordnet und in einzelne umhüllte Setzlinge (41) vereinzelbar verbunden sind, auf ihm angeordnet sein können, zum Bewegen der umhüllten Setzlinge (40), wobei der Setzlings-Bewegungsmechanismus eine Bewegungseinrichtung (30) aufweist, und
einem Vereinzelungsmechanismus, der vor der Bewegungseinrichtung (30) angeordnet ist, wenn in einer Richtung betrachtet, in der die Bewegungseinrichtung (30) die umhüllten Setzlinge (40) bewegen kann, wobei der Vereinzelungsmechanismus ein Paar von Vereinzelungsrollen (1, 2) aufweist, die dazu angepaßt sind, den umhüllten Setzlingen (40a) einer vordersten Reihe gegenüberzustehen,
wobei die umhüllten Setzlinge (40) mit dem Vereinzelungsmechanismus in Kontakt gebracht werden können, wodurch sie in einzelne umhüllte Setzlinge (41) vereinzelbar sind,
**dadurch gekennzeichnet, daß** der Setzlings-Bewegungsmechanismus eine weitere Bewegungseinrichtung (20) aufweist, die parallel zu einer Reihenrichtung der umhüllten Setzlinge (40) hin- und herbewegbar ist, wobei die Bewegungseinrichtung (30) auf der weiteren Bewegungseinrichtung (20) vorgesehen und dazu angepaßt ist, sich in einer Richtung, die senkrecht zu der Bewegungsrichtung der weiteren Bewegungseinrichtung (20) steht, intermittierend an einem Ende der Bewegung letzterer zu bewegen, um nur eine Reihe der umhüllten Setzlinge (40) zuzuführen, und daß
das Paar von Vereinzelungsrollen (1, 2) dazu angepaßt ist, an einem Ende der Bewegung der weiteren Bewegungseinrichtung (20) abwechselnd vor- und zurückbewegt zu werden, wobei eine (1) der Vereinzelungsrollen (1, 2) mit den umhüllten Setzlingen (40a) der vordersten Reihe in Kontakt bringbar ist, während die andere Vereinzelungsrolle (2) in eine Position in der Nähe der umhüllten Setzlinge (40b) einer folgenden Reihe bewegbar ist, wodurch die umhüllten Setzlinge (40) in einzelne umhüllte Setzlinge (41) vereinzelt werden können, beginnend mit den umhüllten Setzlingen (40a) der vordersten Reihe.

## Revendications

1. Appareil de séparation de sachets de semis, comprenant
un mécanisme de déplacement des sachets de semis adapté pour que les sachets (40) de semis soient disposés en rangées et en colonnes et reliés en vue de pouvoir être séparés en sachets individuels (41) de semis placés sur celui-ci, pour déplacer les sachets (40) de semis, ledit mécanisme de déplacement des sachets de semis incluant un mécanisme de déplacement (30), et
un mécanisme de séparation situé devant ledit mécanisme de déplacement (30) tel que vu selon une direction dans laquelle le mécanisme de déplacement (30) est capable de déplacer les sachets de semis (40), ledit mécanisme de séparation incluant une paire de rouleaux (1, 2) séparateurs adaptés en vue de faire face aux sachets de semis (40a) d'un premier rang,
dans lequel les sachets de semis (40) peuvent être amenés en contact avec ledit mécanisme de séparation et sont ainsi séparés en sachets individuels de semis (41),
caractérisé en ce que ledit mécanisme de déplacement de sachet de semis inclut un mécanisme de déplacement supplémentaire (20) qui peut être animé d'un mouvement de vaet-vient parallèlement à une direction de rangée des sachets de semis (40), dans lequel ledit mécanisme de déplacement (30) est prévu sur ledit mécanisme de déplacement supplémentaire (20) et adapté en vue de se déplacer de façon intermittente dans une direction perpendiculaire à la direction de déplacement dudit mécanisme de déplacement supplémentaire (20) à une extrémité du mouvement de celui-ci, afin de ne délivrer qu'une rangée des sachets de semis (40), et que
ladite paire de rouleaux de séparation (1, 2) est adaptée afin de se mouvoir alternativement en arrière et en avant à une extrémité du mouvement dudit mécanisme de déplacement supplémentaire (20), dans lequel un (1) desdits rouleaux de séparation (1, 2) peut être mis en contact avec les sachets de semis (40a) du premier rang, tandis que l'autre rouleau de séparation (2) est déplaçable vers une position à proximité des sachets de semis (40b) d'une rangée suivante, ainsi les sachets de semis (40) peuvent être séparés en sachets de semis individuels (41), en commençant avec les sachets de semis (40a) du premier rang.
